# EUROPÄISCHE PATENTSCHRIFT

(11) **EP 1 782 517 B1**
(45) Veröffentlichungstag und Bekanntmachung des Hinweises auf die Patenterteilung: **03.07.2013**
(21) Anmeldenummer: 05780319.9
(22) Anmeldetag: 10.08.2005
(51) Int. Cl.: H02H 7/30, H02J 3/14, H02H 3/38

(54) **VORRICHTUNG ZUR SICHEREN TRENNUNG EINER KRAFTWERKSANLAGE VON EINEM NETZ BEI EINEM NETZFEHLER**
DEVICE FOR THE SAFE ISOLATION OF A NUCLEAR POWER PLANT FROM A SUPPLY MAINS DURING A MAINS FAILURE
DISPOSITIF DE SEPARATION SURE D'UNE CENTRALE ELECTRIQUE ET D'UN RESEAU EN CAS DE PANNE DE RESEAU

(30) Priorität: 18.08.2004 DE 102004040076
(43) Veröffentlichungstag der Anmeldung: 09.05.2007
(73) Patentinhaber: Siemens Aktiengesellschaft, 80333 München (DE)
(72) Erfinder: ECKL, Hartmut, 91056 Erlangen (DE); HERRMANN, Ewald, 91096 Möhrendorf (DE)
(86) Internationale Anmeldenummer: PCT/EP2005/053927
(87) Internationale Veröffentlichungsnummer: WO 2006/018414

(56) Entgegenhaltungen:
- US-A- 3 271 580
- US-A- 6 008 971
- US-A1- 2004 070 281
- CHEN C-S ET AL: "PROTECTIVE RELAY SETTING OF THE TIE LINE TRIPPING AND LOAD SHEDDING FOR THE INDUSTRIAL POWER SYSTEM" IEEE TRANSACTIONS ON INDUSTRY APPLICATIONS, IEEE SERVICE CENTER, PISCATAWAY, NJ, US, Bd. 36, Nr. 5, September 2000 (2000-09), Seiten 1226-1234, XP001142925 ISSN: 0093-9994
- SHAH K ET AL: "Load Preservation Systems at Facilities Utilizing Co-Generation for the Real Time Protection of Critical Loads during Utility Outages" PETROLEUM AND CHEMICAL INDUSTRY CONFERENCE, 2005. INDUSTRY APPLICATIONS SOCIETY 52ND ANNUAL DENVER, CO, USA 12-14 SEPT. 2005, NEW YORK,IEEE, US, 12. September 2005 (2005-09-12), Seiten 85-93, XP010846483 ISBN: 0-7803-9272-8

## Beschreibung

Die Erfindung betrifft eine Vorrichtung zur sicheren Trennung einer Kraftwerksanlage von einem Versorgungsnetz bei einem Netzfehler. Ferner betrifft die Erfindung eine Kraftwerksanlage mit einer derartigen Vorrichtung sowie eine Industrieanlage mit einer entsprechenden Kraftwerksanlage.

Industrieanlagen mit einer Kraftwerksanlage, wie beispielsweise einer industriellen Dampfturbinenanlage oder Gasturbinenanlage, beziehen für ihre Verbraucher einen Teil der erforderlichen Leistung durch Entnahme aus einem Versorgungsnetz, an dem sie angekuppelt sind, und decken den restlichen Bedarf der zugeordneten Verbraucher durch Eigenerzeugung innerhalb der Kraftwerksanlage.

Für derartige Kraftwerksanlagen sind Netzfehler im Versorgungsnetz besonders kritisch und erfordern kraftwerksseitige Sicherheitsmaßnahmen, um zumindest einen wenn auch eingeschränkten Betrieb der Anlage zu gewährleisten und die zugeordneten Verbraucher der Industrieanlage dann in einer so genannten Insellösung in geeigneter Weise zu versorgen.

Die Kraftwerksanlagen sind insbesondere bei nicht bestimmungsgemäßen Netzverhältnissen sicher vom Versorgungsnetz zu trennen. Dieser Trennvorgang wird auch als Entkuppeln bezeichnet. Eine Vorrichtung zur Trennung einer Kraftwerkanlage von einem Versorgungsnetz ist aus US 3 271 580 bekannt. Nicht bestimmungsgemäße Netzverhältnisse können durch netzseitige Fehler, wie z.B. Kurzschlüsse mit der Folge von Spannungseinbrüchen, Leistungsmangel mit der Folge von Frequenzabfall, so genannte schleichende Überlast mit der Folge von Generatorüberstrom oder auch frei geschaltete Einspeiseleitungen mit der Folge von Frequenzänderungen sein.

Es ist eine Aufgabe der Erfindung eine Vorrichtung zur sicheren Trennung einer Kraftwerksanlage, insbesondere einer industriellen Kraftwerksanlage, bei nicht bestimmungsgemäßen Netzverhältnissen vom Versorgungsnetz zu schaffen, wobei die Kraftwerksanlage dann nach dem Auftreten des Netzfehlers den Industriebetrieb weiterhin sicherstellt.

Diese Aufgabe ist erfindungsgemäß mit einer Vorrichtung zur sicheren Trennung einer Kraftwerksanlage gemäß Anspruch 1, einer Kraftwerksanlage gemäß Anspruch 7 und einer Industrieanlage gemäß Anspruch 10 gelöst. Vorteilhafte Weiterbildungen der Erfindung sind in den Unteransprüchen beschrieben.

Erfindungsgemäß ist eine Vorrichtung zur sicheren Trennung einer Kraftwerksanlage von einem elektrischen Versorgungsnetz bei einem Netzfehler mit einer Entkupplungseinrichtung und einer Lastabwurfeinrichtung versehen, von denen die Entkupplungseinrichtung die Kraftwerksanlage vom Versorgungsnetz entkuppeln kann und die Lastabwurfeinrichtung die sich dadurch ergebende Insellast in Abhängigkeit von der vor dem Netzfehler aus dem Versorgungsnetz bezogenen Leistung gestaffelt reduzieren kann. Bei der Vorrichtung ist ferner die Lastabwurfeinrichtung mit der Entkupplungseinrichtung zu einer, insbesondere vorkonfigurierten Baueinheit integriert.

Mit einer derartigen Vorrichtung gelingt es gemäß der Erfindung eine Netzentkupplungseinrichtung zu schaffen, die sowohl die an der Kraftwerksanlage angeschlossenen Verbraucher als auch die Kraftwerksanlage selbst vor Netzfehlern bzw. externen Fehlern schützt. Der Schutz umfasst insbesondere die oben genannten Fehler Kurzschlüsse, Leistungsmangel, schleichende Überlast und freigeschaltete Einspeiseleitungen. Der Netzabwurf erfolgt ferner erfindungsgemäß gestaffelt in Abhängigkeit der zuvor aus dem Netz bezogenen Leistung. Erfindungsgemäß sind dabei die Entkupplungseinrichtung und die Lastabwurfeinrichtung zu einer Baueinheit integriert, wobei auf vorprojektierte Entkupplungs- und Lastabwurfeinrichtungen auf der Basis von Standardgeräten zurückgegriffen wird. Mit der derart gestalteten Vorrichtung kann gemäß der Erfindung der bisherige Aufwand für eine individuelle Projektierung und spezifische Verwendung unterschiedlicher Geräte entfallen. Zugleich ist eine integrative Lösung für Entkupplung und Lastabwurf geschaffen.

Bei einer vorteilhaften Weiterbildung der erfindungsgemäßen Vorrichtung weist die Entkupplungseinrichtung eine Überwachungs- und Auswerteeinheit auf, mit der ein Einspeiseschalter im Bedarfsfall bei einem spezifischen Netzfehler derart ansteuerbar ist, dass eine Entkupplung vom Versorgungsnetz bewirkt ist.

Eine derartige Vorrichtung ist weiter verbessert, indem die Überwachungs- und Auswerteeinheit eine Logikeinheit umfasst, die eine einstellbare Auswertelogik und einen Signalausgang aufweist, von denen die Auswertelogik einen Netzfehler erkennen und bewerten kann und der Signalausgang einen Entkupplungsbefehl weitergeben kann. Auf diese Weise ist eine Erkennung und bedarfsgerechte Trennung im Hinblick auf die unterschiedlichen, oben genannten Netzfehler möglich.

Um eine besonders präzise Reduzierung der Insellast in Abhängigkeit von der vor dem Netzfehler aus dem Versorgungsnetz bezogenen Leistung zu erreichen, sollte die Lastabwurfeinrichtung eine Messeinrichtung und eine Speichereinrichtung aufweisen, von denen die Messeinrichtung die aktuelle Übergabeleistung kontinuierlich messen kann und die Speichereinrichtung die Übergabeleistung für ein vorgegebenes Zeitintervall, insbesondere für etwa eine Sekunde, abspeichern kann. Bei der Bestimmung der möglichen Reduzierung kann dann auf die derart gespeicherten Werte zurückgegriffen werden.

Wenn an der Kraftwerksanlage mehrere Verbraucher angeschlossen sind, so weist die Lastabwurfeinrichtung bevorzugt eine Logikeinheit mit einer einstellbaren Abwurflogik und eine Anzahl von Ausgängen auf, denen die Verbraucher zugeordnet sind. Die Ausgänge sind ferner derart gestaltet, dass über sie an die zugeordneten Verbraucher gezielt Abschaltbefehle gegeben werden können.

Mit der erfindungsgemäßen Lastabwurfeinrichtung wird ferner bevorzugt die sich ergebende Insellast frequenzgestaffelt und/oder leistungsgestaffelt reduziert. Dazu wird beispielsweise in Abhängigkeit der vor dem Netzfehler entnommenen Leistung zunächst eine mehr oder weniger hohe Last abgeworfen. Dazu wird z.B. ein Abschaltbefehl auf die Anzahl der Ausgänge erteilt, die dem früheren Leistungsimport entsprechen. Eine weitere Entlastung, falls notwendig, erfolgt dann bevorzugt frequenzabhängig in kleinen Stufen.

Verwendet wird die erfindungsgemäße Vorrichtung bevorzugt für Kraftwerksanlagen, insbesondere Industriekraftwerksanlagen, welche mit einer Gasturbine und/oder einer Dampfturbine sowie einem damit gekoppelten elektrischen Generator versehen sind.

Bei solchen Industrieanlagen ist vorteilhaft außer der Kraftwerksanlage ferner eine Anzahl elektrischer Verbraucher und eine Einspeiseeinrichtung für die Entnahme elektrischer Energie aus einem externen Versorgungsnetz vorgesehen, wobei für die Verbraucher die elektrische Energie aus der Kraftwerksanlage und/oder aus dem externen Versorgungsnetz beziehbar ist.

Nachfolgend wird ein Ausführungsbeispiel einer erfindungsgemäßen Vorrichtung zur Trennung einer Kraftwerksanlage von einem elektrischen Versorgungsnetz bei einem Netzfehler anhand der beigefügten schematischen Zeichnungen näher erläutert. Es zeigt:
Fig. 1 ein elektrisches Schaltschema der Einbindung der Vorrichtung in eine Industrieanlage,
Fig. 2 ein Logikbild einer Entkupplungseinrichtung einer Vorrichtung gemäß Fig. 1 und
Fig. 3 ein Logikbild einer Lastabwurfeinrichtung einer Vorrichtung gemäß Fig. 1.

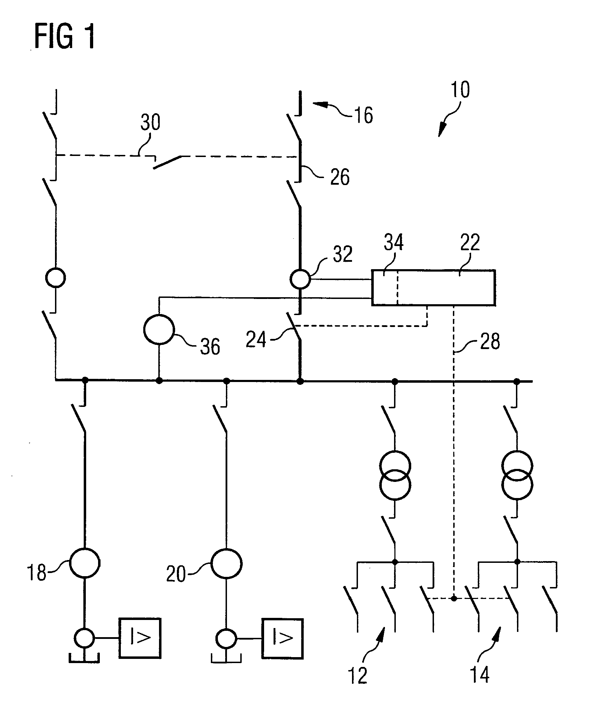

In Fig. 1 ist eine Industrieanlage 10 veranschaulicht, welche zur Energieversorgung zweier Verbrauchern 12 und 14 sowohl an einem Versorgungsnetz 16 angeschlossen, als auch mit zwei Generatoren 18 und 20 als Kraftwerksanlage versehen ist. Um bei einem Netzfehler im Versorgungsnetz 16 die Kraftwerksanlage und auch die Verbraucher 12 und 14 zu schützen und den weiteren Betrieb der Industrieanlage soweit möglich zumindest eingeschränkt aufrecht zu erhalten, ist eine zu einer Baueinheit integrierte Entkupplungs- und Lastabwurfeinrichtung 22 in den elektrischen Verbund der genannten Baueinheiten geschaltet. Die Entkupplungs- und Lastabwurfeinrichtung 22 ist dazu insbesondere mit einem Einspeiseschalter 24 betrieblich gekoppelt, mittels dem sie eine Einspeiseleitung 26 des Versorgungsnetzes 16 wahlweise unterbrechen kann. Ferner ist die Entkupplungs- und Lastabwurfeinrichtung 22 mit mindestens einem Ausgang 28 versehen, mittels dem sie an die Verbraucher 12 und/oder 14 gezielt Abschaltbefehle übergeben kann.

Die genaue Funktion der Entkupplungs- und Lastabwurfeinrichtung 22 in Bezug auf dieses wahlweise Unterbrechen der Netzversorgung sowie Abschalten von Verbrauchern 12 und/oder 14 wird nachfolgend näher erläutert.

Der Einsatz der Entkupplungs- und Lastabwurfeinrichtung hat das Ziel die Industrieanlage 10 bzw. deren Kraftwerksanlage insbesondere vor den Fehlern Kurzschluss, Leistungsmangel, schleichende Überlast und freigeschaltete Einspeiseleitung zu schützen.

Der Kurzschlussfall ist die Störung, die am häufigsten auftritt. In Fig. 1 ist ein Kurzschluss im Versorgungsnetz 16 durch eine gestrichelte Linie 30 veranschaulicht. Durch einen Kurzschluss kann der stabile Betrieb eines Generators 18 oder 20 gefährdet sein. Da der entsprechende Generator 18 oder 20 durch eine solche Störung insbesondere mechanisch an z.B. Kupplung, Getriebe, Bolzen oder Wickelköpfen extrem belastet wird, ist dieser Fehler unbedingt zu vermeiden. Der gravierendste Fehler ist ein kraftwerksnaher 3-poliger Kurzschluss. Bei einem solchen Kurzschluss kann keine oder nur sehr wenig Leistung an das Netz abgegeben werden. Die Generatoren 18 und 20 setzen ihre Antriebsleistung, beispielsweise die einer als Antriebsturbine dienenden Gas- oder Dampfturbine, in kinetische Energie um. Die Generatoren 18 und 20 beschleunigen entsprechend, was zunächst auch noch ohne Probleme möglich ist, aber nur solange bis der Polradwinkel des Generators 18 oder 20 in Phasenopposition mit dem Netz kommt.

Um solche Fälle zu verhindern, muss ein Kurzschlussfall möglichst in einer Schnellzeit von zirka 100 ms bis zirka 120 ms geklärt werden. Kurzschlüsse von einer Dauer von zwischen zirka 200 ms und zirka 400 ms sind hingegen bereits kritisch. Die Einstellung der Entkupplungs- und Lastabwurfeinrichtung 22 ist ferner mit der Rückabsicherung der Schütze der Generatoren 18 und 20 zu koordinieren, damit es nicht zu Überschneidungen kommt.

Die erfindungsgemäße Entkupplungs- und Lastabwurfeinrichtung 22 berücksichtigt diese Zeiten, insbesondere indem sie mit einer Messeinrichtung 32 versehen ist, mittels der die Übergabeleistung aus dem Versorgungsnetz 16 gemessen wird. Die Messwerte werden nachfolgend in einer ebenfalls zur Entkupplungs- und Lastabwurfeinrichtung 22 gehörenden Logikeinheit 34 ausgewertet. Die Netzentkupplung reagiert so nur auf externe Fehler. Sie erfasst ferner mittels einer zweiten Messeinrichtung 36 das Mitsystem, also das System zwischen Versorgungsnetz 16, Generatoren 18 und 20 sowie Verbrauchern 12 und 14. Sie erreicht es so, dass z.B. bei einpoligen Fehlern erst ab Fehlerzeiten zwischen zirka 500 ms bis zirka 1000 ms abgeschaltet bzw. entkuppelt wird.

Als Kriterien zum Entkuppeln wird die Spannung U gemessen und ermittelt, ob diese unter vorbestimmten Festwerten oder Kennlinien liegt. Die Zeit zur Entkupplung wird, insbesondere abhängig von der Stabilitätsgrenze der Generatoren 18 und 20, um so kleiner gewählt, je weiter die Spannung abgesunken ist. Ferner wird bevorzugt die Stromstärke I gerichtet in das Versorgungsnetz zur Erkennung des Fehlerorts ermittelt. Der Zeitverzögerungswert wird dabei kleiner als der Stabilitätswert gewählt. Eine Schaltereigenzeit von zirka 60 ms bis zirka 80 ms des Einspeiseschalters 24 wird ebenfalls berücksichtigt.

Der Fehler eines Leistungsmangels spiegelt sich unmittelbar im Verhalten der Netzfrequenz des Versorgungsnetzes 16 wieder. Im europäischen Netz ist mit Netzschwankungen von kleiner als zirka 50 mHz im Verbundsystem zu rechnen. Bei großen Störungen treten jedoch auch entsprechend größere Abweichungen auf, wenngleich die Reservekapazitäten des Netzes größer als zirka 3000 MW mit einer Frequenzabsenkung von zirka 125 mHz ausgelegt ist. Bei einem Umschalten bzw. Fallen auf eine zunächst unbekannte Insellösung, ist jeder Frequenzabfall und jede theoretische Unterfrequenz möglich.

Als Kriterium für eine Entkupplung in einem solchen Leistungsmangel-Fehlerfall wird je nach zusätzlicher Anforderung ein Bereich von zirka 49 Hz bis zirka 48 Hz Unterfrequenz verwendet. Als zusätzliche Anforderung wird z.B. ein Lastabwurf berücksichtigt, der unter die Entkupplung gestaffelt werden soll. Für eine Kraftwerksanlage bzw. einen Industriebetrieb, der sich nach einem Fehlerfall auf Eigenbedarf umstellen bzw. fangen soll, wird eine schnelle Entkupplung gewählt, damit der durchlaufene bzw. durchfahrene Frequenzbereich klein gehalten wird. Es wird insbesondere eine Entkupplung bei zirka 48 Hz empfohlen, die kaum zeitverzögert sein sollte, um auch die Wiederkehr der Frequenz berücksichtigen zu können.

Der Fehlerfall einer schleichenden Überlast kann durch eine langsame Absenkung bzw. ein langsames Absinken der Netzspannung des Versorgungsnetzes 16 entstehen. Im Extremfall führt dies zu einem Spannungszusammenbruch ("voltage collapse"). Die angeschlossenen Verbraucher 12 und 14 reagieren durch eine erhöhte Abgabe von Blindleistung. Da die Erregersysteme bei maximaler Deckenspannung thermisch für eine Zeitspanne von zirka 15 sec bis zirka 30 sec ausgelegt sind, muss eine Trennung entsprechend vorher erfolgen.

Für die Entkupplung werden dazu als Parameter die Stromstärke I Gen der Generatoren 18 und 20 verwendet und es wird ermittelt, ob diese für eine Zeit t von zirka 3 sec bis zirka 4 sec größer als zirka 120 % bis zirka 130 % des Nennwerts ist. Ferner wird zur Erkennung des Fehlerorts geprüft, ob die Stromstärke I in das Versorgungsnetz 16 hinein gerichtet ist. Die Verzögerungszeit ist schließlich auch unter den Generatorüberstromschutz gestaffelt.

Fehlerfälle der Abschaltung von Einspeiseleitungen ergeben sich je nach der Konstellation von Überfrequenz bzw. Unterfrequenz oder Überspannung im Versorgungsnetz 16. Eine Entkupplung wird in einem solchen Fehlerfall erfindungsgemäß auch ohne eine Messung und Beurteilung darüber vorgenommen, ob die Leistungsrichtung in das Versorgungsnetz hinaus oder von diesem herein gerichtet ist. Als Entscheidungskriterium wird zur Überwachung neben weiteren Kriterien insbesondere auch die Geschwindigkeit der Frequenzänderung df/dt (wobei f die Frequenz und t die Zeit bedeutet) an der Messeinrichtung 32 und/oder 36 überwacht.

Die Entkupplungs- und Lastabwurfeinrichtung 22 dient auf diese Weise insbesondere dazu, bei Fehlern, wie beispielsweise Kurzschlüssen mit oder ohne dreipoligem Kurzschluss oder Erdschlüssen, den Industriebetrieb sicher vom Versorgungsnetz 16 zu nehmen und den weiteren Betrieb der angeschlossenen Verbraucher 12 und 14 mit Hilfe der Generatoren 18 und 20 zumindest eingeschränkt aufrecht zu erhalten. Ferner schließt die Entkupplungs- und Lastabwurfeinrichtung 22 ein asynchrones Zuschalten der Netzeinspeisung bei einer Wiederkehr der Spannung aus. Die Entkupplungs- und Lastabwurfeinrichtung 22 ist dabei derart frei zu konfigurieren, dass sie zum Einsatz kommen kann, egal ob nur einer oder auch mehrere verschieden große Generatoren 18 und 20 im Mitsystem bzw. Werksnetz zum Einsatz kommen. Sie ermöglicht es ferner Grenzwerte für die Entkupplung der örtlichen Energieversorgungsunternehmen ("Grid Code") zu beachten und zu unterbieten.

In der Entkupplungs- und Lastabwurfeinrichtung 22 ist bevorzugt ein Frequenzband (voreingestellt auf zirka 98 % bis zirka 102 % nn, entsprechend zirka +/- 0,1 Hz) integriert, außerhalb welchem an den Generatoren 18 und 20 Leistungs- und Vordruckregler von zugehörigen Turbinen blockiert werden und die Turbine auf Drehzahlregelung umgeschaltet wird. Dies geschieht, damit die Regler der Turbinen nicht unkontrolliert in eine Endlage driften können. Eine Blockierung der Leistungs- und Vordruckregler der Turbinen erfolgt zusätzlich auch abhängig von der Schalterstellung des Einspeiseschalters 24. Darüber hinaus ist das Frequenzband bevorzugt etwas breiter eingestellt, als die oben genannten Werte. Eine Blockierung des Blindleistungs- oder so genannten COS PHI Reglers erfolgt erfindungsgemäß nur abhängig von der Schalterstellung des Einspeiseschalters 24. Es ist also ein Öffnen des Einspeiseschalters 24 notwendig. Dies wird auch als Inselbetriebserkennung bezeichnet. Bei kraftwerksinternen Fehlern wir die Entkupplungs- und Lastabwurfeinrichtung 22 nicht ausgelöst. Die Entkupplung wird so zunächst mit den gemessenen Werten Spannung U, Frequenz F, Frequenzänderung df/dt, Generatorüberlast und Stromrichtung bzw. Leistungsrichtung realisiert. Eine Vektorsprungfunktion kann gegebenenfalls je nach Kundenwunsch realisiert werden.

Realisiert ist die Entkupplungs- und Lastabwurfeinrichtung 22 unter Verwendung des SIPROTEC Schutztechnik Gerätes 7UM61, welches ein multifunktionaler Maschinenschutz ist und in der Ausführung Generator Standard 7UM6111-5BB00-0BEO mit der Option Entkupplungseinrichtung (df/dt und eventuell Vektorsprung) ausgeführt ist. Es kann ferner auch das Gerät 7UM62 verwendet werden.

In dem Gerät 7UM611 sind in der Ausführung Standard zuzüglich Entkupplung folgende Funktionen enthalten, wobei Klammernummern ANSI-Bezeichnungen sind, mit X markierte Funktionen werden immer verwendet, mit Z markierte Funktionen bei Bedarf:

| | |
|---|---|
| Ständererdschlussschutz gerichtet ungerichtet (59N, 64G, 67G) | Z |
| Empfindlicher Erdstromschutz (50/51GN) | Z |
| Überlastschutz (49) | Z |
| Überstromzeitschutz mit Unterspannungshaltung (51) | X |
| Überstromzeitschutz (UMZ) gerichtet (50/51/67) | X |
| Abhängiger Überstromzeitschutz (AMZ) (51V) | (Z) |
| Überspannungsschutz (59) | X |
| Unterspannungsschutz (27) | X |
| Frequenzschutz (81) | X |
| Rückleistungsschutz (32R) | - |
| Übererregungsschutz (U/f) (24) | Z |
| Sicherungsfehlermonitor (Fuse Failure Monitor) (60FL) | X |
| Einkopplungen | X |
| Vorwärtsleistungsüberwachung (32F) | X |
| Untererregungsschutz (40) | Z |
| Schieflastschutz (46) | Z |
| Schalterversagerschutz (50BF) | (Z) |
| Binäreingänge | X |
| Frequenzänderungsschutz (81R) (df/dt) | X |
| Vektorsprung | (Z) |

In der Vollversion des Geräts 7UM61 wären noch folgende Funktionen möglich:

| | |
|---|---|
| Zuschaltschutz (50/27) | |
| SES mit 3. Harmonischer (59NT, 27TN(3.H)) | |
| Impedanzschutz (21) | Z |

Von diesen Funktionen ist nur der Impedanzschutz interessant.

Das genannte Gerät wird entweder eingebaut und in einem Schrank verdrahtet oder auf einem Einbaublech mit Strom-, Spannungs- und Kommandoklemmen sowie Zubehör aufgebaut geliefert. Dabei wird ein Gerät gewählt, welches als Einbaugerät in einen Schwenkrahmen eingesetzt werden kann.

In dem Gerät werden CFC-Verknüpfungen (Continuous Function Chart) realisiert und Aktionen des Geräts werden mittels verfügbarer LED's gespeichert angezeigt. Das Gerät bietet auch bedingt die Möglichkeit einer Störschriebauswertung mit Auswerteprogrammen, beispielsweise DIGSI/SIGRA. Es wird dabei immer ein Gerät mit einer 220 V Wechselspannungsversorgung verwendet, um die Empfindlichkeit auch bei einer 110 V Versorgungsspannung nicht anpassen zu müssen. Der Teil der Entkupplungseinrichtung innerhalb der Entkupplungs- und Lastabwurfeinrichtung ist mit einem externen Schalter gemeldet abschaltbar ausgeführt. Ferner sind die Einrichtung und auch die Hilfskreise mit eigenen Schutzschaltern abgesichert. Falls die Einrichtung gestört, oder wegen Spannungswandlerschutzschalterfall blockiert ist, wird eine entsprechende Meldung abgesetzt. Der Life-Kontakt (Meldung Einrichtung gestört) liegt auf Klemmen für eine externe Meldung.

Die derartige Entkupplungseinrichtung ist an drei Stromwandler an der Einspeisstelle (Netzkuppelschalter) mit xx /1 A (Ampere) angeschlossen. Ein Ampere ist wegen der geringen Stromwandlerbebürdung gewählt, 5 Ampere ist möglich, wenn in der Anlage bereits 5 A Wandler eingebaut sind.

Das Gerät wird an die Spannung des Mitsystems angeschlossen, welches insbesondere in Form einer Kraftwerkssammelschiene ausgestaltet ist. Es wird von drei Spannungswandlern yy / 100 V ausgegangen, 110 V oder 125 V sind möglich. Auch zwei Spannungswandler in V-Schaltung können verwendet werden. Bei Ausfall des Spannungswandlerschutzschalters -FAAA oder Ansprechen der FF Überwachung werden die spannungsabhängigen Entkupplungsfunktionen blockiert und es erfolgt eine Störmeldung. Die Störmeldung des Spannungswandlerschutzschalters - FAAA ist zu Meldezwecken im Leitsystem vorhanden. Die Freigabe der Unterspannungsauslösungen in der Entkupplung ist somit nur bei eingeschaltetem Spannungswandlerschutzschalter gegeben. Zusätzlich wird die geräteinterne Fuse Failure Funktion zur Blockierung verwendet.

Die externe Anbindung der Einrichtung ist wie folgt:

| | |
|---|---|
| Spannungsversorgung 110 - 220 V Gleichstrom | |
| Strom der Einspeisestelle 3-phasig, 1 A (5 A möglich) | |
| Messspannung 3-phasig vom Spannungswandler 3 x 110 V Wechselstrom (oder 2 x 100 V V-Spannung) | |
| Hilfskontakt des Spannungswandlerschutzschalters NC | (BE1 H) |
| Stellung des Generatorschalters RM EIN (anlagenabhängig) | (BE2 H) |
| Binäres Eingangssignal von Generator(en) Überlast (BE3 H) External Trip 1 | |
| Stellung des Einspeiseschalters (Netzkuppelschalters) RM AUS | (BE4 H) |
| Freigabe durch Schalter Entkupplungseinrichtung EIN | (BE5 H) |
| Störschriebanregung von extern (optional) | (BE6 H) |
| Signal zur Uhrzeitsynchronisierung von LT (verwendbar) | (BE7 H) |
| Ausbefehl zu Kuppelschalter | BA3 |
| Ausbefehl auf Lastabwurf 1 | BA12 |
| Ausbefehl auf Lastabwurf 2 | BA13 |
| Ausbefehl auf Lastabwurf 3 | BA14 |
| Ausbefehl auf Lastabwurf 4 | BA15 |
| Meldung Einrichtung gestört | (Life Kontakt) |
| Meldung Einrichtung hat entkuppelt | BA18 |
| Meldung Einrichtung hat abgeworfen | BA19 |

Es wird ferner eine automatische und/oder manuelle Synchronisierung für den Einspeiseschalter 26 angeboten, denn letztendlich muss ein entkuppelter und auf Eigenenergieerzeugung geretteter Industriebetrieb irgendwann wieder mit dem Versorgungsnetz 16 synchronisiert werden, ohne den Industriebetrieb abstellen zu müssen.

In Fig. 1 ist dargestellt, wie die Entkupplungs- und Lastabwurfeinrichtung 22 an der Einspeiseleitung 26 angeschlossen ist. Wenn eine zweite Einspeiseleitung vorgesehen ist, so werden die gleichphasigen Ströme der beiden Leitungen addiert und die Entkupplungsbefehle werden auf zwei, den beiden Einspeiseleitungen jeweils zugeordnete Einspeiseschalter gegeben.

Die Überstrom-Signale (I> Signale) zur Entkupplung kommen von einer UMZ-Stufe des Generatorschutzes wenn das Stromverhältnis I/In (mit I Ist-Strom und In Nennstrom) größer als zirka 120 % bis zirka 130 % nach zirka 3 sec bis zirka 4 sec ist. Die Zeit ist auf jeden Fall kürzer als jene des Überstromzeitschutzes der Generatoren 18 und 20 gewählt. In Fig. 1 ist auch zu sehen, dass im Versorgungsnetz 16 weiter draußen Schalter sein können, welche, falls sie geöffnet werden, eine Entkupplung hervorrufen müssen.

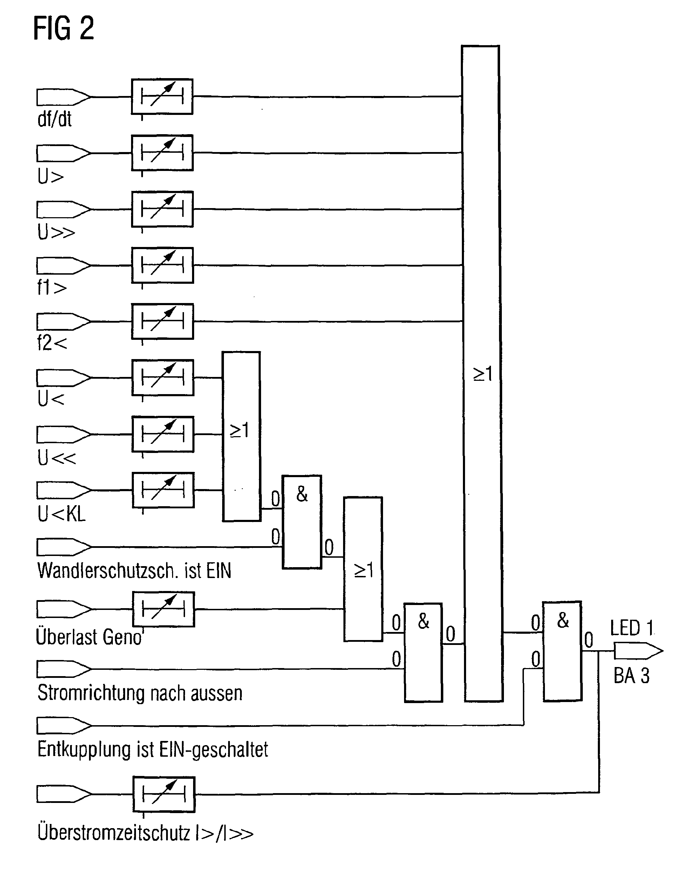

In Fig. 2 ist das zugehörige Logikbild des Anteils der Entkupplungseinrichtung innerhalb der Entkupplungs- und Lastabwurfeinrichtung 22 dargestellt. Innerhalb dieses Logikbildes werden als Überlast Geno bzw. Überlast Generator die Überstromanregungen des jeweiligen Generatorschutzes verwendet, die über BE (siehe externe Anbindung der Entkupplungseinrichtung) eingekuppelt werden. Ein BE-Anschluss für n Generatoren ist akzeptabel.

Zur Sicherheit ist ferner der Spannungswandlerschutzschalter mit abgefragt, weil beim Öffnen desselben die Unterspannung angeregt und, wenn das Kriterium der Leistungsrichtung noch nicht verschwunden wäre, eine Fehlauslösung hervorgerufen werden könnte. Eine Leistungs- bzw. Stromrichtung nach außen bedeutet dabei, dass der Wirklastfluss Richtung Versorgungsnetz 16 strömt.

Wenn Frequenz- (f-) oder Spannungs- (U-) Kriterien nicht verwendet werden sollen, kann die Zeitverzögerung auf Unendlich gestellt werden bzw. die Funktion im Contiuous Function Chart abgeschnitten werden.

Insbesondere auf Sonderwunsch können folgende Zusatzfunktionen mit der Entkupplungseinrichtung zumindest in beschränktem Maße realisiert werden:
Ein gerichteter oder ungerichteter Erdschlussschutz: Bei der Ankopplung an das Versorgungsnetz 16 ist zu unterscheiden, ob die Anbindung direkt an ein Mittelspannungsnetz oder über Einspeisetransformatoren an ein Hochspannungsnetz erfolgt. Mit der erfindungsgemäßen Entkupplungseinrichtung wird an einer Sammelschiene des Mitsystems gemessen. Eine Erdschlussmeldung für die Sammelschiene ist dabei in jedem Fall sinnvoll.

Ein Überlastschutz: Ein Überlastschutz ist nur bedingt sinnvoll.

Ein abhängiger Überstromzeitschutz (AMZ): Dieser wird auf besondere Kundenforderung realisiert, wegen der verschiedenen Kennlinien aber nicht immer selektiv genug einstellbar sein.

Ein Überregungsschutz (U/f): Dies ist eine besonders sinnvolle Schutzmöglichkeit für angeschlossene Transformatoren und wird ferner auf Kundenwunsch realisiert. Zur Einstellung sind die Überregungs-Kennlinien erforderlich.

Ein Unterregungsschutz: Dieser ist innerhalb der erfindungsgemäßen Entkupplungseinrichtung nicht sinnvoll einsetzbar. Ein Schieflastschutz: Mit einem solchen Schutz gibt es erstmalig die Möglichkeit die Schieflast an der Einspeisestelle zu messen und bei der Phasenunterbrechung in der Einspeiseleitung 26 sicher zu entkuppeln. Die Einstellungen einer 1-poligen KU (bei Hochspannungsnetzen) sind hierbei zu berücksichtigen.

Eine Auskreisüberwachung mit BE's: Es wird dabei dauernd die Ausschleife überwacht, ob die Auslösespannung anliegt und der Kreis bis durch die Auslösespule geschlossen ist. Bei einem Fehler meldet die Auskreisüberwachung die Störung. Hierfür sind zwei freie BE erforderlich.

Ein Schalterversagerschutz mit BE: Wenn der Einspeiseschalter einen Aus-Befehl vom Schutzgerät bekommt und nicht innerhalb einer voreingestellten Zeit seine Aus-Rückmeldung zurückmeldet, könnte der Aus-Befehl auf die nächsten überlagerten Schalter weitergeben werden. Diese Schalter liegen aber möglicherweise nicht mehr im Einflussbereich des Verwenders der erfindungsgemäßen Entkupplungs- und Lastabwurfeinrichtung 22. Diese Funktion wird daher nicht realisiert.

Die zusätzlichen Schutzfunktionen werden auf das gleiche Kommandorelais KR1 (BA1) rangiert, wie die Entkupplungseinrichtung. Die einzelnen Zusatzfunktionen können ferner in Form einer Sammelmeldung angezeigt werden.

Im Hinblick auf die Zusatzfunktionen ist dabei schließlich die Anzahl der verfügbaren BE und BA (siehe externe Anbindung) zu prüfen.

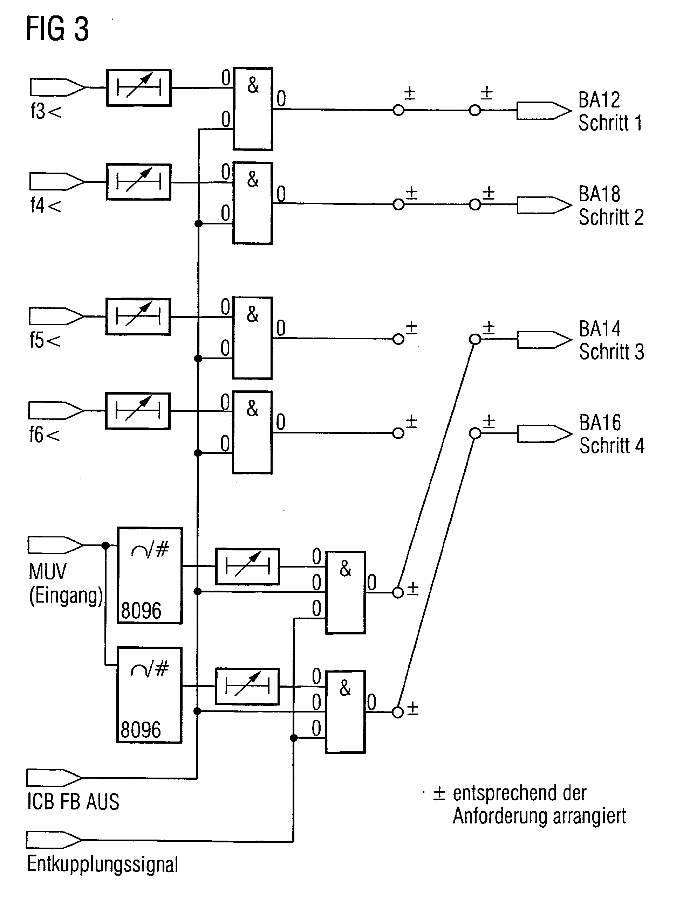

In Fig. 3 ist das Logikbild des Bestandteils der Lastabwurfeinrichtung innerhalb der erfindungsgemäßen Entkupplungs- und Lastabwurfeinrichtung 22 veranschaulicht.

Wenn bei einer Industrieanlage 10 im normalen Betriebsfall immer oder gelegentlich Leistung importiert wird, ist bei einem externen Fehler und somit einem Ausfall der Netzeinspeisung die Last der Verbraucher 12 oder 14 ganz oder teilweise abzuwerfen. Dies ist notwendig, um die Industrieanlage 10 und insbesondere deren Turbinen sowie Generatoren 18 und 20 nicht zu überlasten. Bei ausschließlichem Leistungsexport ist hingegen kein Lastabwurf erforderlich.

Ein Lastabwurf wird dabei grundsätzlich nur durchgeführt, wenn die Entkupplungseinrichtung eingeschaltet ist. Ferner wird ein Lastabwurf nur zugelassen, wenn der Einspeiseschalter 24, welcher auch als Netzkuppelschalter bezeichnet wird, offen bzw. ausgeschaltet ist.

Es werden zwei Arten des Lastabwurfes unterschieden: der leistungsgestaffelte Lastabwurf und der frequenzgestaffelte Lastabwurf.

Beim leistungsgestaffelten Lastabwurf wird die Übergabeleistung dauernd mit der Messeinrichtung 32 gemessen und mit zwei Grenzwerten verglichen. Die Übergabeleistung wird ferner mit einer (nicht dargestellten) Speichereinrichtung über einen Zeitraum von zirka 1 sec zwischengespeichert. Wenn eine Entkupplung erfolgt, wird automatisch ein Abschaltbefehl auf jene Anzahl der Ausgänge 28 erteilt, die dem früheren Leistungsimport entsprechen.

Wenn beispielsweise 10 MW maximal importiert werden könnten und der Import größer als 3 MW gewesen ist, so werden bei einer Entkupplung 4 MW abgeworfen. Ist der Import größer als 6 MW gewesen, werden bei der Entkupplung 4 MW + 4 MW = 8 MW abgeworfen. Die Festlegung, von welchen Verbrauchern die Last abgeworfen wird, geschieht durch den Kunden bzw. Benutzer der erfindungsgemäßen Entkupplungs- und Lastabwurfeinrichtung 22.

Durch den derartigen Lastabwurf werden die Turbinensätze und Generatoren 18 und 20 entlastet und nicht schlagartig unnötig überlastet. Eine weitere Entlastung erfolgt, falls notwendig, frequenzabhängig in kleinen Stufen, also frequenzgestaffelt, falls der Benutzer weitere entbehrliche Verbraucher hat. Falls nicht erfolgt eine Auslösung der Turbosätze durch Unterfrequenz. Die Befehle sind über Hilfsrelais mit mehreren Kontakten auf Klemmen gelegt.

Die Einstellung der Lastabwurfeinrichtung werden kundenspezifisch auf das Übergabeleistungsprofil abgestimmt. Die Lastabwurfstufen werden vom Kunden entsprechend in seinem Verbrauchernetz aufgelegt.

Mit einem Gerät 7UM61 können neben dem Frequenzband nach oben und unten zur Entkopplung noch weitere zwei Unterfrequenzstufen zeitverzögert für eine Lastabschaltung verwendet werden. Diese sind z.B. f3 kleiner als zirka 48,0 Hz bei 0,1 sec; f4 kleiner als zirka 47,8 Hz bei 0,1 sec. Mittels CFC sind erfindungsgemäß zwei weitere Grenzwertstufen realisiert worden, nämlich beispielsweise f5 kleiner als 47,3 Hz bei 0,1 sec und f6 kleiner als 47,0 Hz bei 0,1 sec. Die Hysterese der Grenzwerte beträgt zirka 5 %, so dass Einstellungen über zirka 95 % nn damit nicht möglich sind. Die Voreinstellung beträgt 40 Hz.

Weitere Voreinstellungen sind in einer leicht anpassbaren Liste der Einstellwerte erstellt. In der Liste sind ferner sinnvolle Einstellbereiche angegeben. Eine Festlegung der theoretisch richtigen Einstellungen erfolgt abhängig von der jeweiligen Anlage durch eine Netzberechnung. Die Kombination von Entkupplungseinrichtung und Lastabwurfeinrichtung ist demgegenüber vorverdrahtet, vorgeprüft und voreingestellt. Die Ansprech- und Auslösewerte werden bei der Prüfung dokumentiert.

Für die Realisierung einer derart abgesicherten Industrieanlage 10 muss der Kunde folgend Angaben zur Projektierung machen: Aufstellungsort, Aufstellungsland, Art des Industriebetriebes, Spannung des Versorgungsnetzes, vorhandene KU 1-oder 3-polig, Erdbehandlung des Versorgungsnetzes, Erdbehandlung des Werknetzes im Inselbetrieb, Installierte Leistungserzeugung, Anzahl der installierten Turbosätze, maximaler Leistungsimport und Leistungsexport, üblicher Betriebszustand (auf den die Einrichtung konzipiert sein soll), installierter Verbrauch, geplante und mögliche Lastabwurfstufen, Strom- und Spannungswandlerdaten der Einspeisestelle(n) bzw. Einspeisezelle(n), Steuerspannung der Einspeisestelle, Konditionen des Elektroversorgungsunternehmens bezüglich der Entkopplungsgrenzwerte, Angaben über die Art des Betriebs der Turbosätze (vordruckgeregelt, MW-leistungsgeregelt, blindleistungsgeregelt, COS PHI geregelt am Generator oder an der Einspeisestelle, Art der Erregung der Turbosätze (statisch oder mit RG-Erregung)).

Schließlich muss der Kunde noch das Kriterium Überstrom Generator (UMZ Signal, nicht AMZ Signal) festlegen. Bei mehreren Generatoren ist dies eine Kombination aller Generatoren parallel. Das Kriterium beträgt beispielsweise Wert > 1,2 I /In. Eine Zeitverzögerung erfolgt dann in der Entkupplungseinrichtung gemeinsam für alle Generatoren.

Der Kunde muss auch die z.B. vier Lastabwurfstufen auf seine abschaltbaren Verbraucher(gruppen) festlegen. Dazu stehen ihm pro Stufe vier potentialfreie Kontakte zur Verfügung. Ferner muss festgelegt werden, ob die vier Frequenzstufen oder der gespeicherte lastabhängige Abwurf zu realisieren ist. Die Einbindung der erfindungsgemäßen Entkupplungs- und Lastabwurfeinrichtung 22 erfolgt dann mit den entsprechenden Vorgaben in der oben beschriebenen Weise.

## Patentansprüche

1. Vorrichtung zur sicheren Trennung einer Kraftwerksanlage (18, 20) von einem elektrischen Versorgungsnetz (16) bei einem Netzfehler, mit einer Entkupplungseinrichtung und einer Lastabwurfeinrichtung, von denen die Entkupplungseinrichtung die Kraftwerksanlage (18, 20) vom Versorgungsnetz (16) entkuppeln kann und die Lastabwurfeinrichtung die sich dadurch ergebende Insellast in Abhängigkeit von der vor dem Netzfehler aus dem Versorgungsnetz (16) bezogenen Leistung gestaffelt reduzieren kann, **dadurch gekennzeichnet, dass** die Lastabwurfeinrichtung mit der Entkupplungseinrichtung zu einer Baueinheit (22) integriert ist.

2. Vorrichtung nach Anspruch 1,
bei der die Entkupplungseinrichtung eine Überwachungs- und Auswerteeinheit (32, 36) aufweist, mit der ein Einspeiseschalter (24) im Bedarfsfall bei einem spezifischen Netzfehler derart ansteuerbar ist, dass eine Entkupplung vom Versorgungsnetz (16) bewirkt ist.

3. Vorrichtung nach Anspruch 2,
wobei die Überwachungs- und Auswerteeinheit (32, 36) eine Logikeinheit (34) umfasst, die eine einstellbare Auswertelogik und einen Signalausgang aufweist, von denen die Auswertelogik einen Netzfehler erkennen und bewerten kann und der Signalausgang einen Entkupplungsbefehl weitergeben kann.

4. Vorrichtung nach einem der vorhergehenden Ansprüche,
wobei die Lastabwurfeinrichtung eine Messeinrichtung (32) und eine Speichereinrichtung aufweist, von denen die Messeinrichtung (32) die aktuelle Übergabeleistung kontinuierlich messen kann und die Speichereinrichtung die Übergabeleistung für ein vorgegebenes Zeitintervall, insbesondere für etwa eine Sekunde, abspeichern kann.

5. Vorrichtung nach Anspruch 4,
wobei die Lastabwurfeinrichtung eine Logikeinheit (34) mit einer einstellbaren Abwurflogik und eine Anzahl von Ausgängen (28) aufweist, denen Verbraucher (12, 14) zugeordnet sind, und die Ausgänge (28) an die zugeordneten Verbraucher (12, 14) gezielt Abschaltbefehle übergeben können.

6. Vorrichtung nach Anspruch 5,
bei der die Lastabwurfeinrichtung die sich ergebende Insellast frequenzgestaffelt und/oder leistungsgestaffelt reduzieren kann.

7. Kraftwerksanlage (18, 20), insbesondere Industriekraftwerksanlage, mit einer Vorrichtung nach einem der Ansprüche 1 bis 6.

8. Kraftwerksanlage nach Anspruch 7 mit einer Gasturbine und einem mit der Gasturbine gekoppelten elektrischen Generator.

9. Kraftwerksanlage nach Anspruch 7 mit einer Dampfturbine und einem mit der Dampfturbine gekoppelten elektrischen Generator.

10. Industrieanlage (10) mit einer Kraftwerksanlage (18, 20) nach einem der Ansprüche 7 bis 9, einer Anzahl elektrischer Verbraucher (12, 14) und einer Einspeiseeinrichtung (26) für die Entnahme elektrischer Energie aus einem externen Versorgungsnetz (16), wobei für die Verbraucher (12, 14) die elektrische Energie aus der Kraftwerksanlage (18, 20) und/oder aus dem externen Versorgungsnetz beziehbar ist.

## Claims

1. Apparatus for safety isolation of a power station (18, 20) from an electrical power supply system (16) in the event of a system fault, comprising a decoupling device and a load shedding device, of which the decoupling device can decouple the power station (18, 20) from the power supply system (16) and the load shedding device can reduce, in staggered fashion, the resulting island load depending on the power drawn from the power supply system (16) prior to the system fault, **characterized in that** the load shedding device is integrated with the decoupling device to form a structural unit (22).

2. Apparatus according to Claim 1, in which the decoupling device has a monitoring and evaluation unit (32, 36), with which a feed switch (24) can be actuated as required, in the event of a specific system fault, in such a way that decoupling from the power supply system (16) is effected.

3. Apparatus according to Claim 2, wherein the monitoring and evaluation unit (32, 36) comprises a logic unit (34), which has adjustable evaluation logic and a signal output, of which the evaluation logic can identify and evaluate a system fault and the signal output can transmit a decoupling command.

4. Apparatus according to one of the preceding claims, wherein the load shedding device has a measuring device (32) and a storage device, of which the measuring device (32) can measure the present transfer power continuously and the storage device can store the transfer power for a predetermined time period, in particular for approximately one second.

5. Apparatus according to Claim 4, wherein the load shedding device has a logic unit (34) with adjustable shedding logic and a number of outputs (28), with which consumers (12, 14) are associated, and the outputs (28) can transmit disconnection commands in a targeted manner to the associated consumers (12, 14).

6. Apparatus according to Claim 5, in which the load shedding device can reduce the resultant island load in frequency-staggered and/or power-staggered fashion.

7. Power station (18, 20), in particular industrial power station, comprising an apparatus according to one of Claims 1 to 6.

8. Power station according to Claim 7 with a gas turbine and an electric generator coupled to the gas turbine.

9. Power station according to Claim 7 with a steam turbine and an electric generator coupled to the steam turbine.

10. Industrial plant (10) with a power station (18, 20) according to one of Claims 7 to 9, a number of electrical consumers (12, 14) and a feed device (26) for drawing electrical energy from an external power supply system (16), wherein the electrical energy can be drawn from the power station (18, 20) and/or from the external power supply system for the consumers (12, 14).

## Revendications

1. Dispositif pour séparer d'une manière sûre une centrale (18, 20) électrique d'un réseau (16) d'alimentation électrique, s'il se produit une défaillance du réseau, comprenant un dispositif de découplage et un dispositif de rejet de charge, par lesquels le dispositif de découplage peut découpler la centrale ( 18, 20 ) électrique du réseau ( 16 ) d'alimentation et le dispositif de rejet de charge peut réduire par échelon la charge en régime isolé qui s'ensuit en fonction de la puissance rapportée à celle avant la défaillance du réseau ( 16 ) d'alimentation, **caractérisé en ce que** le dispositif de rejet de charge est intégré avec le dispositif de découplage en une unité ( 22 ) de construction.

2. Dispositif suivant la revendication 1,
dans lequel le dispositif de découplage comporte une unité ( 32 ) de contrôle et une unité ( 36 ) d'exploitation, par lesquelles un commutateur ( 24 ) d'alimentation peut, en cas de besoin, s'il se produit une défaillance spécifique du réseau, être commandé, de manière à provoquer un découplage du réseau ( 16 ) d'alimentation.

3. Dispositif suivant la revendication 2,
dans lequel l'unité ( 32 ) de contrôle et l'unité ( 36 ) d'exploitation comprennent une unité ( 34 ) logique, qui a une logique d'exploitation réglable et une sortie de signal, par lesquelles la logique d'exploitation peut reconnaître une défaillance du réseau et l'évaluer et la sortie du signal peut acheminer une instruction de découplage.

4. Dispositif suivant l'une des revendications précédentes,
dans lequel le dispositif de rejet de charge comprend un dispositif ( 32 ) de mesure et un dispositif de mémorisation, par lesquels le dispositif ( 32 ) de mesure peut mesurer en continu la puissance transmise présente et le dispositif de mémorisation peut mémoriser la puissance transmise pendant un intervalle prescrit, notamment pendant à peu près une seconde.

5. Dispositif suivant la revendication 4,
dans lequel le dispositif de rejet de charge a une unité ( 34 ) logique ayant une logique de rejet réglable et un certain nombre de sorties ( 28 ), auxquelles sont associés des consommateurs ( 12, 14 ) et les sorties ( 28 ) peuvent transmettre des instructions d'arrêt ciblées aux consommateurs ( 12, 14 ) associés.

6. Dispositif suivant la revendication 5,
dans lequel le dispositif de rejet de charge peut réduire d'une manière échelonnée en fréquence et/ou d'une manière échelonnée en puissance, la charge en ilôt qui se produit.

7. Centrale ( 18, 20 ) électrique, notamment centrale électrique industrielle ayant un dispositif suivant l'une des revendications 1 à 6.

8. Centrale électrique suivant la revendication 7 ayant une turbine à gaz et une génératrice électrique couplée à la turbine à gaz.

9. Centrale électrique suivant la revendication 7 ayant une turbine à vapeur et une génératrice électrique couplée à la turbine à vapeur.

10. Installation ( 10 ) industrielle ayant une centrale ( 18, 20 ) électrique suivant l'une des revendications 7 à 9, un certain nombre de consommateurs ( 12, 14 ) électriques et un dispositif ( 26 ) d'alimentation pour prélever de l'énergie électrique d'un réseau ( 16 ) extérieur d'alimentation, dans laquelle, pour les consommateurs ( 12, 14 ), l'énergie électrique peut être fournie par la centrale ( 18, 20 ) électrique et/ou par le réseau extérieur d'alimentation.
